(19) Europäisches Patentamt
European Patent Office
Office européen des brevets

(11) **EP 3 375 340 B1**

(12) **EUROPEAN PATENT SPECIFICATION**

(45) Date of publication and mention
of the grant of the patent:
**12.02.2020  Bulletin 2020/07**

(51) Int Cl.:
***B04C 5/187*** *(2006.01)*     ***A47L 9/16*** *(2006.01)*
***A47L 9/20*** *(2006.01)*     ***B01D 46/00*** *(2006.01)*

(21) Application number: **18161491.8**

(22) Date of filing: **13.03.2018**

(54) **CYCLONIC SEPARATION APPARATUS**

ZYKLONISCHE TRENNVORRICHTUNG

APPAREIL DE SÉPARATION CYCLONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2017  CN 201710153656
20.09.2017  GB 201715200**

(43) Date of publication of application:
**19.09.2018  Bulletin 2018/38**

(73) Proprietor: **CONTA S.R.O
441 00 Podborany (CZ)**

(72) Inventor: **BIAN, Xiaolong
Chongchuan District,
Nantong city, JiangSu Province (CN)**

(74) Representative: **Murgitroyd & Company
Murgitroyd House
165-169 Scotland Street
Glasgow G5 8PL (GB)**

(56) References cited:
**EP-A2- 1 836 942     CN-A- 102 090 871**

## Description

This invention relates to a cyclone separation apparatus and more particularly but not solely to a vacuum cleaner incorporating a cyclone separation apparatus.

Cyclonic separation apparatus are well known apparatus for removing particles from a gas flow without the use of filters. Cyclone separators have found utility in the field of vacuum cleaners to separate dirt and dust from the airflow. It is well known that the separation efficiency of cyclonic separators is dependent upon the force which is applied to the particles in the airflow, in accordance with the following formula:

$$F= 2mv^2/d$$

where

F= the force applied to the particles;
m= the mass of the particle;
v= the flow velocity; and,
d= the diameter of the cyclonic air flow

Thus, it is evident that the separation efficiency is inversely proportional to the diameter of the cyclone chamber, such that smaller diameter cyclones are more suited to separating lighter particles than larger diameter cyclones. Accordingly, it is well known for vacuum cleaners to incorporate a first upstream separation stage, comprising a relatively large diameter cyclone arranged to separate coarse dirt and dust from the airflow. Any light particles of dust remaining in the airflow that are not separated by the cyclone separator are carried into a second downstream separation stage, which may comprise a filter or one or more cyclone separators of a smaller diameter.

Cyclone separators are not well suited to separating light but large waste matter, such as fluff, hairs, fibres and pieces of plastic or paper from the airflow. In order to prevent such matter from being carried over into the downstream separation stage, the air in the upstream cyclone is generally arranged to swirl around a central filter device, through which air and finer dust particles leave the upstream cyclone.

WO2004/008932 discloses one such central filter device or so-called shroud comprising a hollow plastic tubular body which extends axially of the cyclone chamber from its upper end. An array of apertures is provided in the body which allows air and finer dust particles to leave the upstream cyclone yet blocks any larger matter.

A problem of cleaners of the type disclosed in WO2004/008932 is that hairs, fibres, filaments, and other elongate flexible elements can become wrapped or matted around the shroud, with the result that the shroud apertures are blocked or restricted, thereby decreasing the separation efficiency of the cleaner. This problem is also exacerbated because users may not think to clean the shroud regularly and thus a significant number of elongate flexible elements may accumulate around the shroud. Also, cleaning the shroud of elongate flexible elements can be difficult and messy for the user.

CN102090871 discloses a cyclonic separation apparatus arranged to separate matter from a fluid flow, the apparatus comprising a fluid inlet, a cyclone separation chamber having a cyclone axis about which the fluid entering the chamber rotates, a filter extending axially of the chamber upstream of a fluid outlet of the apparatus, the filter having a filter surface which faces radially outwardly of the cyclone axis, wherein a filter cleaning device is mounted inside the chamber, the device comprising a plurality of fingers which extend axially over said filter surface at respective circumferential positions, the fingers comprising projections which extend radially outwardly, the cleaning device being displaceable axially of the filter, the chamber comprising an end portion which can be displaced to allow separated matter to be removed from the chamber. EP1836942 discloses a cyclonic separation apparatus arranged to separate matter from a fluid flow, a cyclone separation chamber having a cyclone axis about which the fluid entering the chamber rotates, and a cover having a suction port forcing entering air to form a cyclonic air flow, a cyclone body connected to the cover, the cyclone body having a discharging pipe discharging the admitted air, a grill disposed at the discharging pipe, and a grill cleaning unit movably disposed in the discharging pipe so as to remove dust attached to the grill.

We have now devised an improved cyclonic separation apparatus of the kind disclosed in CN102090871A1 which is characterised in that the cleaning device is biased towards said end portion such that the device is displaced axially of the filter under the applied bias when said end portion is displaced to remove separated matter from the chamber.

In use, the filter can be cleaned by displacing the cleaning device so as to cause the finger projections to move axially across the filter surface, thereby pulling any accumulated hairs, fibres, filaments, or other elongate flexible elements axially away from the filter. The removed matter can then be removed from the cleaning device and discarded before the cleaning device is displaced back into position. The cleaning device is displaceable axially of the filter under an applied bias when said end portion is displaced, so that the cleaning device is conveniently operated each time the chamber is emptied and thus the risk of neglecting to clean the filter is avoided.

The fingers may extend from a body of the cleaning device. The body may be slidably mounted on a guide which extends axially of the filter. The projections may extend from the distal ends of the fingers.

The fingers may be slidably mounted in respective channels formed in the filter surface. The fingers may comprise outer surfaces which are arranged to substantially co-extend with respective adjacent regions of the filter surface, so that the fingers do not cause turbulence in the fluid flowing around the filter.

The cyclonic separation apparatus may be arranged in a vacuum cleaner to separate dirt and dust from an airflow entering the cleaner.

An embodiment of the present invention will now be described by way of an example only and with reference to the accompanying drawings in which:

Figure 1 is a side view of the body of a cordless hand-held stick vacuum cleaner having a cyclonic separation apparatus in accordance with the present invention;

Figure 2 is a part sectional view of the vacuum cleaner of Figure 1;

Figure 3 is side view of a cleaning device of the vacuum cleaner of Figure 1; and

Figures 4 and 5 are part sectional view of the vacuum cleaner of Figure 1, illustrating how the cleaning device is operated during emptying of the cleaner.

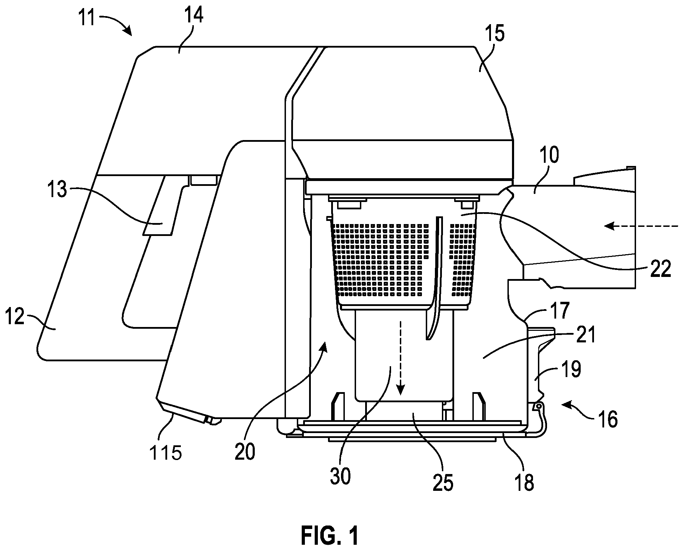

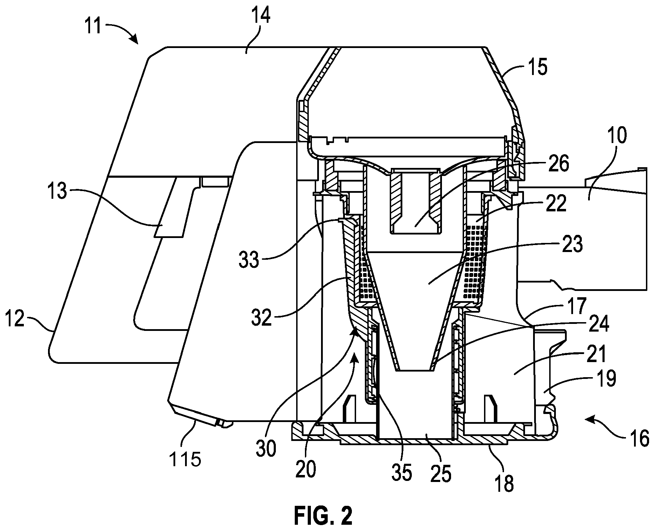

Referring to Figures 1 and 2 of the drawings, there is shown the body of a cordless hand-held stick vacuum cleaner having a tubular inlet port 10 to which a cleaning tool or head (not shown) can be connected either directly or by means of one or more extension tubes. The body comprises a chassis 11 having a handle 12 at its rear which extends downwardly and rearwardly from an exhaust filter housing 14 of the chassis 11. A trigger switch 13 is provided on the handle 12 for connecting a rechargeable battery 115 to the motor of a motor and fan unit (not shown) disposed inside a head 15 of the chassis 11, the head 15 being circular in plan.

The body also comprises a removable dust collection container 16 having a generally tubular side wall 17, from which the tubular inlet port 10 extends forwardly. The dust collection container 16 also comprises a circular bottom end wall which is hinged to the side wall 17 to form a flap 18 that can be pivoted downwardly by releasing catch 19 on the side wall 17, so as to allow separated dirt and dust to be emptied from the dust collection container 16. The upper end of the dust collection container 16 is open and is sealingly mounted to the underside of the head 15 of the chassis 11. A shroud assembly 20 extends from the underside of the head 15 of the chassis 11 into the dust collection container 16.

The tubular side wall 17 of the dust collection container 16 defines a circular-section separation chamber 21 of an outer cyclone separator that provides the first (upstream) dust separation stage of the cleaner. The shroud assembly 20 comprises a hollow shroud 22 having a perforated tubular side wall mounted concentrically at the upper end of the chamber 21. The shroud assembly 20 encloses an inner cyclone separator that provides the second (downstream) dust separation stage of the cleaner having a circular-section separation chamber 23. The side wall 24 of the chamber 23 is frustro-conical at its open lower end. A lower end portion of the frustro-conical side wall extends through a bottom wall of the shroud 22 into an elongate tubular container 25, which extends axially of the upstream cyclone chamber 21 along the centre axis thereof. The lower end of the container 25 is sealingly seated against the flap 18, such that the lower end of the container 25 is also opened when the flap 18 is opened.

A tubular projection extends axially into the upper end of the downstream cyclone chamber 23 to form a so-called vortex finder 26, which is fluidly connected to the exhaust filter inside housing 14 via the motor and fan unit. A filter may be disposed between the vortex finder 26 and the motor and fan unit.

When the motor of the motor and fan unit is energised, the air pressure at the vortex finder 26 drops: this draws dirt and dust laden air into the cleaner, where it tangentially enters the upper end of the upstream cyclone chamber 21 through the inlet port 10. As the air swirls inside the chamber 21, larger (denser) particles in the rotating airflow have too much inertia to follow the tight curve of the airflow and strike the tubular side wall 17 of the chamber, moving then in a boundary layer to the bottom of the chamber 21 where they are deposited in the lower region of the chamber 21. As the air flows downwards inside the upstream chamber 21, the air in the spiral flow is constantly drawn radially inwardly through the perforated shroud 22.

The air then flows upwardly inside in the shroud 22 and tangentially enters the upper end of the downstream cyclone chamber 23. Any light particles of dust remaining in the airflow from the upstream cyclone separator have too much inertia to follow the very tight curve of the airflow inside the cyclone chamber 23 and strike the frusto-conical side wall 24 thereof, the dust being carried downwardly through the open lower end of the chamber 23, where it then falls into the elongate tubular container 25. It will be appreciated that the dust separated by both the upstream and downstream separators can be conveniently emptied by opening the flap 18.

A problem with the cleaner so far defined is that hairs, fibres, filaments, and other elongate flexible elements that are drawn into the cleaner often become wrapped or matted around the shroud 22, with the result that the shroud apertures are blocked or restricted, thereby decreasing the separation efficiency of the cleaner. This problem is also exacerbated because users may not think to clean the shroud regularly and thus a significant number of elongate flexible elements may accumulate around the shroud 22. Also, cleaning the shroud of elongate flexible elements can be difficult and messy for the user. In order to overcome these problems, the vacuum cleaner in accordance with the present invention further comprises a cleaning device 30, which is displaceable to remove hairs, fibres, filaments, and other elongate flexible elements that have accumulated around the shroud 22.

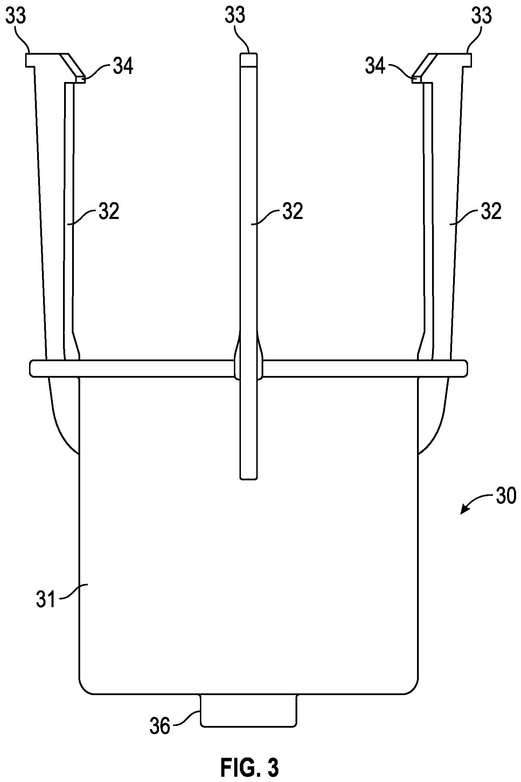

Referring to Figure 3 of the drawings, the cleaning device 30 is a one-piece moulding of plastics material and comprises a tubular body 31 which is open at both ends. A plurality of fingers 32 extend axially from the upper end of the tubular body 31, the fingers 32 being equally spaced around the circumference of the tubular body 31. The distal end of each finger 32 comprises a hook 33 and a catch 34 which respectively extend radially outwardly and inwardly with respect to the axis of the tubular body 31.

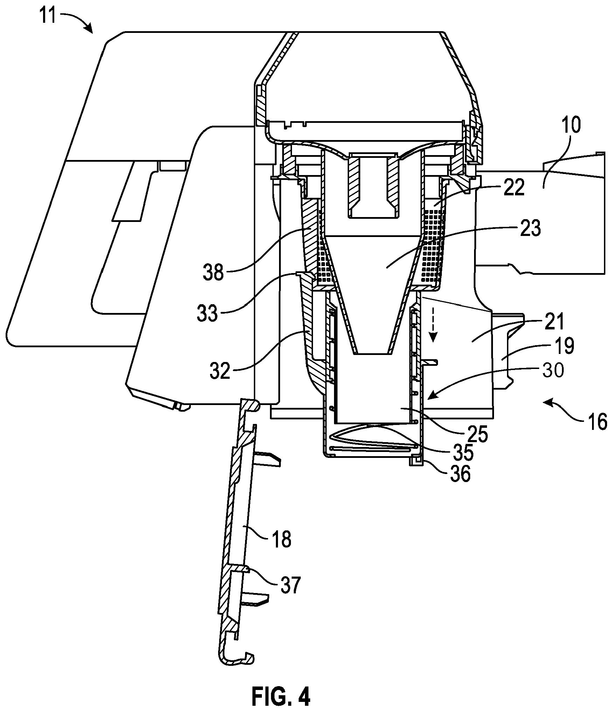

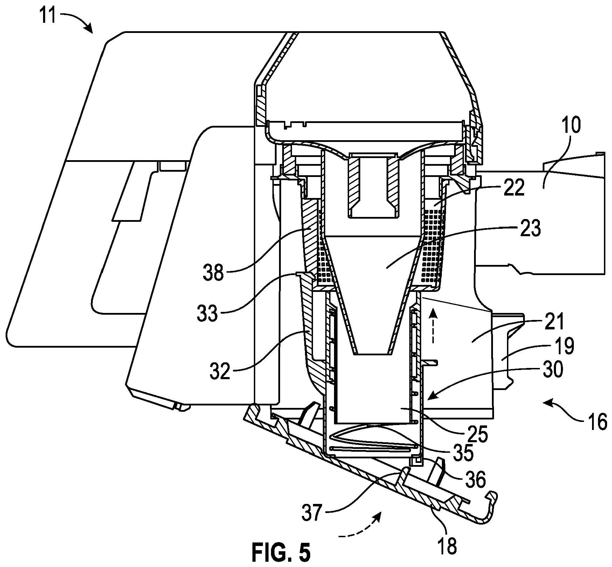

Referring again to Figures 1 and 2 and also to Figures 4 and 5 of the drawings, the body 31 of the cleaning device 30 is slidably mounted around the elongate tubular container 25, which extends axially of at the bottom of the upstream cyclone chamber 21 and which acts as guide for the device 30. A spring 35 biases the cleaning device 30 downwardly and away from the shroud 22. An axial projection 36 on the lower end of the tubular body 31 abuts a formation 37 on the inside surface of the flap 18 to retain the cleaning device 30 in its retracted position shown in Figures 1 and 2: In this position, the fingers 32 of the cleaning device 30 extend fully along respective channels 38 formed axially along the outer surface of the shroud 22. The radially outer surface of the fingers 32 co-extend with the outer surface of the shroud 22, so as to avoid causing any air turbulence. The hook 33 of each finger 32 extends radially outwardly of the shroud 22.

When the catch 19 holding the flap 18 in its closed position is released to empty the dust collection container 16, the cleaning device 30 is extended downwardly under the applied spring bias. This causes the finger hooks 33 to move downwardly, thereby pulling any accumulated hairs, fibres, filaments, or other elongate flexible elements downwardly away from the shroud 22. The catches 34 on the fingers 32 engage the lower end wall of the channels 38 to retain the cleaning device 30 in-situ on the shroud assembly 20 in its extended position. When the flap 18 is closed, the cleaning device 30 is pushed back to its retracted position.

It will be appreciated that the cleaning device 30 is operated each time the dust container 16 is emptied and the risk of the user neglecting to clean the shroud 22 is also avoided.

## Claims

1. A cyclonic separation apparatus arranged to separate matter from a fluid flow, the apparatus comprising a fluid inlet (10), a cyclone separation chamber (21) having a cyclone axis about which the fluid entering the chamber rotates, a filter extending axially of the chamber upstream of a fluid outlet of the apparatus, the filter (22) having a filter surface which faces radially outwardly of the cyclone axis, wherein a filter cleaning device (30) is mounted inside the chamber, the device (30) comprising a plurality of fingers (32) which extend axially over said filter surface at respective circumferential positions, the fingers (32) comprising projections (33) which extend radially outwardly, the cleaning device (30) being displaceable axially of the filter (22), the chamber comprising an end portion (18) which can be displaced to allow separated matter to be removed from the chamber, **characterised in that** the cleaning device (30) being biased towards said end portion such that the device (30) is displaced axially of the filter (22) under the applied bias when said end portion (18) is displaced to remove separated matter from the chamber (21).

2. A cyclonic separation apparatus as claimed in claim 1, in which the fingers (32) extend from a body (31) of the cleaning device (30).

3. A cyclonic separation apparatus as claimed in claim 2, in which the body (31) is slidably mounted on a guide (25) which extends axially of the filter (22).

4. A cyclonic separation apparatus as claimed in claim 2 or claim 3, in which the projections (33) extend from the distal ends of the fingers (32).

5. A cyclonic separation apparatus as claimed in any preceding claim, in which the fingers (32) are slidably mounted in respective channels (38) formed in the surface of the filter (22).

6. A cyclonic separation apparatus as claimed in claim 5, in which the fingers (32) comprise outer surfaces which are arranged to substantially co-extend with respective adjacent regions of the surface of the filter (22).

7. A cyclonic separation apparatus as claimed in any preceding claim, in which the filter (22) comprises a shroud having an apertured tubular side wall forming said filter surface.

8. A cyclonic separation apparatus as claimed in claim 3, in which the guide (25) comprises the tubular wall of a collection chamber for collecting matter separated by a separation device (23) mounted downstream of the filter (22).

9. A vacuum cleaner comprising a cyclonic separation apparatus as claimed in any preceding claim.

## Patentansprüche

1. Eine Zyklonabscheidervorrichtung, die eingerichtet ist, um Material aus einer fluiden Strömung zu trennen, wobei die Vorrichtung Folgendes beinhaltet: einen Fluideinlass (10), eine Zyklonabscheidungskammer (21) mit einer Zyklonachse, um die sich das Fluid, das in die Kammer eintritt, dreht, einen Filter, der sich axial in Bezug auf die Kammer stromaufwärts in Bezug auf einen Fluidauslass der Vorrichtung erstreckt, wobei der Filter (22) eine Filteroberfläche aufweist, die in Bezug auf die Zyklonachse radial nach außen weist, wobei ein Filterreinigungsgerät (30) innerhalb der Kammer befestigt ist, wobei das Gerät (30) eine Vielzahl von Fingern (32) beinhaltet, die sich an jeweiligen Umfangspositionen axial über der Filteroberfläche erstrecken, wobei die Finger (32) Vorsprünge (33) beinhalten, die sich radial nach außen erstrecken, wobei das Reinigungsgerät (30) axial in Bezug auf den Filter (22) versetzbar ist, wobei die Kammer einen Endabschnitt (18) beinhaltet, der versetzt werden kann, um die Entfernung von abgeschiedenem Material aus der Kammer zu ermöglichen, **dadurch gekennzeichnet, dass** das Reinigungsgerät (30) so zu dem Endabschnitt hin vorgespannt ist, dass das Gerät (30) unter der angewandten Vorspannung axial in Bezug auf den Filter (22) versetzt wird, wenn der Endabschnitt (18) versetzt wird, um abgeschiedenes Material aus der Kammer (21) zu entfernen.

2. Zyklonabscheidervorrichtung gemäß Anspruch 1, wobei sich die Finger (32) von einem Körper (31) des Reinigungsgeräts (30) erstrecken.

3. Zyklonabscheidervorrichtung gemäß Anspruch 2, wobei der Körper (31) verschiebbar auf einer Führung (25) befestigt ist, die sich axial in Bezug auf den Filter (22) erstreckt.

4. Zyklonabscheidervorrichtung gemäß Anspruch 2 oder Anspruch 3, wobei sich die Vorsprünge (33) von den distalen Enden der Finger (32) erstrecken.

5. Zyklonabscheidervorrichtung gemäß einem der vorhergehenden Ansprüche, wobei die Finger (32) verschiebbar in entsprechenden Kanälen (38), gebildet in der Oberfläche des Filters (22), befestigt sind.

6. Zyklonabscheidervorrichtung gemäß Anspruch 5, wobei die Finger (32) äußere Oberflächen beinhalten, die eingerichtet sind, um sich im Wesentlichen gemeinsam mit entsprechenden angrenzenden Bereichen der Oberfläche des Filters (22) zu erstrecken.

7. Zyklonabscheidervorrichtung gemäß einem der vorhergehenden Ansprüche, wobei der Filter (22) einen Schutzkragen beinhaltet, der eine offene röhrenförmige Seitenwand aufweist, die die Filteroberfläche bildet.

8. Zyklonabscheidervorrichtung gemäß Anspruch 3, wobei die Führung (25) die röhrenförmige Wand einer Sammelkammer zum Sammeln von Material beinhaltet, abgeschieden durch ein Abscheidungsgerät (23), das stromabwärts des Filters (22) befestigt ist.

9. Ein Staubsauger, der eine Zyklonabscheidervorrichtung gemäß einem der vorhergehenden Ansprüche beinhaltet.

## Revendications

1. Un appareil de séparation cyclonique arrangé pour séparer de la matière d'un écoulement de fluide, l'appareil comprenant une entrée de fluide (10), une chambre de séparation de cyclone (21) ayant un axe de cyclone autour duquel le fluide entrant dans la chambre tourne, un filtre s'étendant axialement par rapport à la chambre en amont d'une sortie de fluide de l'appareil, le filtre (22) ayant une surface de filtre qui fait face radialement vers l'extérieur par rapport à l'axe de cyclone, dans lequel un dispositif de nettoyage de filtre (30) est monté à l'intérieur de la chambre, le dispositif (30) comprenant une pluralité de doigts (32) qui s'étendent axialement par-dessus ladite surface de filtre au niveau de positions circonférentielles respectives, les doigts (32) comprenant des saillies (33) qui s'étendent radialement vers l'extérieur, le dispositif de nettoyage (30) étant déplaçable axialement par rapport au filtre (22), la chambre comprenant une portion d'extrémité (18) qui peut être déplacée afin de permettre à de la matière séparée d'être retirée de la chambre, **caractérisé en ce que** le dispositif de nettoyage (30) est sollicité vers ladite portion d'extrémité de telle sorte que le dispositif (30) est déplacé axialement par rapport au filtre (22) sous la sollicitation appliquée lorsque ladite portion d'extrémité (18) est déplacée afin de retirer de la matière séparée de la chambre (21).

2. Un appareil de séparation cyclonique tel que revendiqué dans la revendication 1, dans lequel les doigts (32) s'étendent depuis un corps (31) du dispositif de nettoyage (30).

3. Un appareil de séparation cyclonique tel que revendiqué dans la revendication 2, dans lequel le corps (31) est monté de façon à pouvoir coulisser sur un guide (25) qui s'étend axialement par rapport au filtre (22).

4. Un appareil de séparation cyclonique tel que revendiqué dans la revendication 2 ou la revendication 3, dans lequel les saillies (33) s'étendent depuis les extrémités distales des doigts (32).

5. Un appareil de séparation cyclonique tel que revendiqué dans n'importe quelle revendication précédente, dans lequel les doigts (32) sont montés de façon à pouvoir coulisser dans des canaux respectifs (38) formés dans la surface du filtre (22).

6. Un appareil de séparation cyclonique tel que revendiqué dans la revendication 5, dans lequel les doigts (32) comprennent des surfaces externes qui sont arrangées pour substantiellement co-s'étendre avec des régions adjacentes respectives de la surface du filtre (22).

7. Un appareil de séparation cyclonique tel que revendiqué dans n'importe quelle revendication précédente, dans lequel le filtre (22) comprend un flasque ayant une paroi latérale tubulaire à ouverture formant ladite surface de filtre.

8. Un appareil de séparation cyclonique tel que revendiqué dans la revendication 3, dans lequel le guide (25) comprend la paroi tubulaire d'une chambre de collecte pour collecter de la matière séparée par un dispositif de séparation (23) monté en aval du filtre (22).

9. Un aspirateur comprenant un appareil de séparation cyclonique tel que revendiqué dans n'importe quelle revendication précédente.

**FIG. 1**

**FIG. 2**

FIG. 3

**FIG. 4**

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004008932 A
- CN 102090871
- EP 1836942 A
- CN 102090871 A1